Europäisches Patentamt

European Patent Office

Office européen des brevets

(19)

(11) Veröffentlichungsnummer: **0 062 602**
**B1**

# EUROPÄISCHE PATENTSCHRIFT

(45) Veröffentlichungstag der Patentschrift:
**13.11.85**

(21) Anmeldenummer: **82730029.4**

(22) Anmeldetag: **12.03.82**

(51) Int. Cl.⁴: **H 02 K 3/30**, H 02 K 3/34, H 01 B 3/04, B 32 B 19/02

(54) **Elektrischer Leiter mit einer aus Bändern gewickelten Isolierhülse.**

(30) Priorität: **06.04.81 DE 3114420**

(43) Veröffentlichungstag der Anmeldung:
**13.10.82 Patentblatt 82/41**

(45) Bekanntmachung des Hinweises auf die Patenterteilung:
**13.11.85 Patentblatt 85/46**

(84) Benannte Vertragsstaaten:
**AT CH FR GB IT LI NL SE**

(56) Entgegenhaltungen:
**CH - A - 403 902**
**DE - A - 1 463 945**
**DE - C - 1 490 427**
**FR - A - 1 213 205**

(73) Patentinhaber: **Siemens Aktiengesellschaft, Berlin und München Wittelsbacherplatz 2, D-8000 München 2 (DE)**

(72) Erfinder: **Pollmeier, Franz-Josef, Dipl.-Ing., Krottnaurer Strasse 10c, D-1000 Berlin 38 (DE)**
Erfinder: **Ihlein, Walter, Dr. rer. nat., Glockenturmstrasse 36, D-1000 Berlin 19 (DE)**

## Beschreibung

Die Erfindung bezieht sich auf einen elektrischen Leiter bzw. Leiterverband mit einer aus Bändern gewickelten Isolierhülse, die mit einer härtbaren Tränkharzmischung imprägniert und ausgehärtet ist, insbesondere Wicklungsstäbe oder Spulen elektrischer Maschinen, wobei die Bänder aus auf einem flexiblen Träger aus Papier, Gewebe, Vlies oder Kunststoffolie aufgebrachtem, anorganischem, flächigem Isolierstoff, wie Glimmerplättchen, Feinglimmer oder Glimmerpapier bestehen, die mit dem Träger, miteinander und gegebenenfalls mit einer Decklage mittels eines Bindemittels verklebt sind.

Eine derartige Isolierhülse ist aus der DE-C-1 490 427 bekannt. Es ist aber üblich, innerhalb einer derartigen Isolierhülse nur einheitliche Glimmerbänder zu verwenden, d. h. Glimmerbänder mit ein und demselben Träger. Dabei werden bisher hauptsächlich poröse Träger, wie Papier, Glasseide oder Vlies verwendet, damit eine gute Durchtränkung der Isolierhülse mit der Tränkharzmischung erzielt wird.

Aus der CH-A-403 902 ist eine aus Bändern gewickelte Isolierhülse bekannt, bei der zwischen den Lagen aus Bändern und einem porösen Träger einzelne oder mehrere Lagen aus nichtporöser Kunststoffolie abwechselnd gewickelt sind.

Die Dicke einer Isolierhülse richtet sich nach der zulässigen Betriebsfeldstärke, wobei außerdem die in deutschen und anderen Vorschriften geforderte Kurzzeitdurchschlagsfestigkeit von mehr als 4facher Nennspannung berücksichtigt werden muß. Eine dünnere Isolierhülse ergäbe aber bei Wicklungen elektrischer Maschinen eine bessere Nutfüllung mit Kupfer und der Wärmewiderstand zwischen dem Leiter und dem Blechpaket würde verringert werden, wodurch eine Leistungssteigerung möglich wird.

Der Erfindung liegt daher die Aufgabe zugrunde, eine imprägnierbare, aus Bändern gewickelte Isolierhülse elektrischer Leiter bzw. Leiterverbände zu schaffen, die eine verbesserte Spannungsfestigkeit aufweist.

Die Lösung der Aufgabe besteht in einem elektrischen Leiter bw. Leiterverband mit einer aus 2 unterschiedlichen Bändern gewickelten Isolierhülse, die mit einer härtbaren Tränkharzmischung imprägniert und ausgehärtet ist, insbesondere Wicklungsstäbe oder Spulen elektrischer Maschinen, wobei Bänder, die aus auf einen porösen Träger aus Papier, Gewebe, Vlies oder Kunststoffolien aufgebrachtem, anorganischem, flächigem Isolierstoff, wie Glimmerplättchen, Feinglimmer oder Glimmerpapier bestehen, mit dem Träger, miteinander und gegebenenfalls mit einer Decklage mittels eines Bindemittels verklebt sind, so daß in der Isolierhülse zwischen den Lagen aus Bändern mit einem porösen Träger einzelne oder mehrere Lagen von Bändern aus einer nichtporösen Kunststoffolie abwechselnd gewickelt sind, dadurch gekennzeichnet, daß auch die nichtporösen Kunststoffolien den anorganischen flächigen Isolierstoff tragen und sich überlappen.

Durch eine derartige Mischisolierung innerhalb der Isolierhülse wird die Durchtränkbarkeit der Isolierhülse in überraschender Weise nicht beeinträchtigt, weil in den benachbarten Lagen zu den Bändern mit nichtporösem Kunststoffolienträger noch für das einströmende Tränkharz genügend Kanäle zur Verfügung stehen. Durch die Verwendung von Zwischenlagen mit Bändern mit nichtporösem Kunststoffolienträger ergibt aber eine wesentliche Erhöhung der Spannungsfestigkeit sowohl hinsichtlich einer kurzzeitigen Spannungsbeanspruchung (Kurzzeit-Durchschlagsfestigkeit) bei der vorgegebenen Stichprobenprüfung, als auch hinsichtlich der Dauerspannungsbeanspruchung während des Betriebes. Diese Verbesserung ist besonders bei dünnen Isolierhülsen stark ausgeprägt. Dagegen hatten Versuche, die Erhöhung der Spannungsfestigkeit durch Einwickeln von elektrisch dichten nichtporösen Kunststoffolien in aus Glimmerbändern mit porösem Träger gewickelten Isolierhülsen zu erreichen, nicht zum Erfolg geführt. Durch die erfindungsgemäße Mischisolierung läßt sich aber infolge der erhöhten Spannungsfestigkeit die Betriebsfeldstärke heraufsetzen und entsprechend die Dicke der Isolierhülse verringern, wobei sich zusätzlich die gegenüber einem porösen Träger geringere Dikke des nichtporösen Kunststoffolienträgers günstig auswirkt. Außerdem zeigt es sich überraschend, daß eine derartig aufgebaute Isolierhülse auch eine höhere Wärmestandfestigkeit besitzen kann, d. h. daß die Isolierhülse dauernd höheren Temperaturen ausgesetzt sein kann, ohne daß sich der Anstieg des Verlustfaktors (tan $\alpha$) verändert.

Es empfiehlt sich, die Lagen mit einem Band mit nichtporösen Kunststoffolienträgern gleichmäßig über die Höhe der Isolierhülse zwischen den Lagen aus einem Band mit einem porösen Träger zu verteilen. Dadurch ergibt sich ein die Durchtränkung begünstigender schichtenweiser Aufbau der Isolierhülse. Es wird ein Mischungsverhältnis von 1 : 1 angestrebt. Bei großen Dikken der Isolierhülse ist es zweckmäßig, zwischen den Glimmerbändern zusätzliche saugfähige Schichten, z. B. aus Glaswirrvlies, vorzusehen. Diese üben auf das Tränkharz eine Dochtwirkung aus.

Als nichtporöser Kunststoffolienträger für die Glimmerbänder sind besonders alle temperaturbeständigen Folien auf der Basis von Polyimiden, Polycarbonaten und Polyestern, wie z. B. Folien aus Terephthalsäurepolyester geeignet. Zum Erleichtern der Verklebung und zum besseren Einbau der Kunststoffolie in die Isolierung ist es vorteilhaft, daß die Oberflächen des nichtporösen Kunststoffolienträgers aktiviert sind. Dies kann physikalisch, chemisch oder mittels eines Haftvermittlers geschehen.

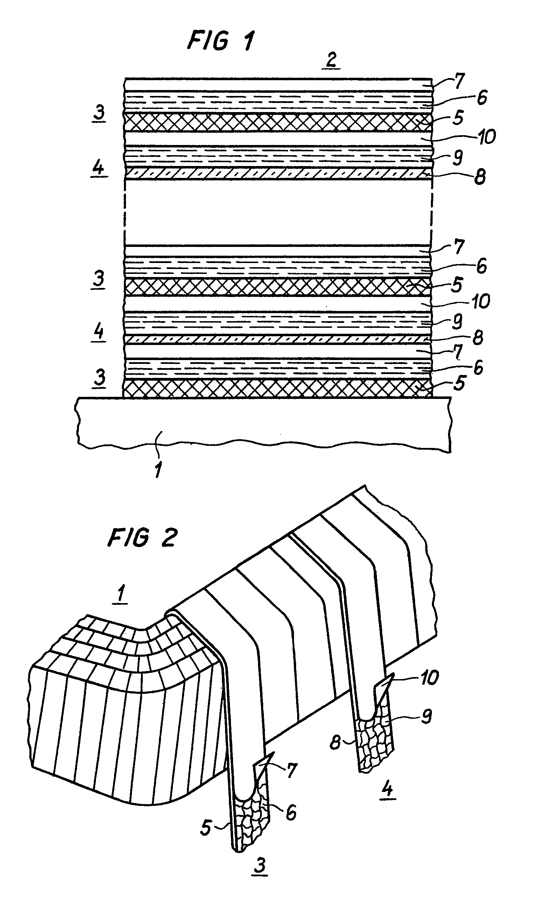

Im folgenden sei die Erfindung noch anhand des in den Fig. 1 und 2 der Zeichnung dargestellten Ausführungsbeispiels näher erläutert.

Fig. 1 zeigt prinzipiell, in stark vergrößertem Maßstab dargestellt, einen Schnitt durch eine gemäß der Erfindung aufgebaute Isolierhülse. In Fig. 2 ist, ebenfalls schematisch, das Aufbringen der Glimmerbänder auf den Leiterverband des Wicklungsstabes angedeutet.

Um den elektrischen Leiter 1, der als Wicklungsstab oder als Spulenseite einer elektrischen Maschine auch aus mehreren gegeneinander isolierten Teilleitern bestehen kann, werden zum Aufbau der später mit Tränkharz zu imprägnierenden und auszuhärtenden Isolierhülse 2 Glimmerbänder 3 und 4 unterschiedlicher Zusammensetzung lagenweise aufgewickelt. Die unterste, unmittelbar auf den Leiter 1 aufliegende Lage der Isolierhülse 2 bildet das Glimmerband 3. Dieses besteht aus einem Träger 5 aus Glasseide, auf dem mit Hilfe eines nicht dargestellten Bindemittels eine Schicht 6 aus Spaltglimmer aufgebracht ist, über den wiederum mit dem Bindemittel eine Decklage 7 verklebt ist. Die Decklage 7 besteht vorteilhafterweise aus dem gleichen Material wie der poröse Träger 5, d. h. aus Glasseide. Die darüberliegende nächste Lage der Isolierhülse ist aus dem Glimmerband 4 gewickelt. Dieses besitzt einen temperaturbeständigen nichtporösen Kunststoffolienträger 8 aus einer Folie aus Terephthalsäurepolyester, auf welcher mittels eines nicht dargestellten Bindemittels die Spaltglimmerschicht 9 aufgebracht ist. Darüber liegt die Decklage 10, die ebenfalls aus Kunststoffolie oder aus einem geeigneten porösen Material bestehen kann. Darauf folgen mehrere Lagen des Glimmerbandes 3, von denen nur eine dargestellt ist, bis dann wieder eine Lage des Glimmerbandes 4 mit dem nichtporösen Kunststoffolienträger 8 in die Isolierhülse 2 eingeschlossen ist. Die oberste Lage der Isolierhülse 2 ist von dem Glimmerband 3 gebildet.

Die Außenhülle der Isolierhülse kann aus einer nicht dargestellten Deck- oder Schutzlage bestehen, die selbst als Außenglimmschutz wirken kann oder auf die nach der Imprägnierung und der Aushärtung der Außenglimmschutz aufgebracht wird.

## Patentansprüche

1. Elektrischer Leiter bzw. Leiterverband (1) mit einer aus 2 unterschiedlichen Bändern gewickelten Isolierhülse (2), die mit einer härtbaren Tränkharzmischung imprägniert und ausgehärtet ist, insbesondere Wicklungsstäbe oder Spulen elektrischer Maschinen, wobei Bänder (3), die aus auf einen porösen Träger aus Papier, Gewebe, Vlies oder Kunststoffolien aufgebrachtem, anorganischem, flächigem Isolierstoff, wie Glimmerplättchen, Feinglimmer oder Glimmerpapier bestehen, mit dem Träger, miteinander und gegebenenfalls mit einer Decklage mittels eines Bindemittels verklebt sind, so daß in der Isolierhülse (2) zwischen den Lagen aus Bändern (3) mit einem porösen Träger (5) einzelne oder mehrere Lagen von Bändern (4) aus einer nichtporösen Kunststoffolie abwechselnd gewickelt sind, dadurch gekennzeichnet, daß auch die nichtporösen Kunststoffolien (8) den anorganischen flächigen Isolierstoff tragen und sich überlappen.

2. Elektrischer Leiter nach Anspruch 1, dadurch gekennzeichnet, daß die Lagen mit einem Band (4) mit nichtporösem Kunststoffolienträger (8) gleichmäßig über der Höhe der Isolierhülse (2) zwischen den Lagen aus einem Band (3) mit einem porösen Träger (5) verteilt sind.

3. Elektrischer Leiter nach Anspruch 1 oder 2, dadurch gekennzeichnet, daß das Mischungsverhältnis zwischen den Lagen aus einem Band (3) mit einem porösen Träger (5) und den Lagen aus einem Band (4) mit nichtporösem Kunststoffolienträger (8) angenähert 1 : 1 beträgt.

4. Elektrischer Leiter nach Anspruch 1, dadurch gekennzeichnet, daß als nichtporöser Kunststoffolienträger (8) eine Folie aus Terephthalsäurepolyester verwendet ist.

5. Elektrischer Leiter nach Anspruch 1, dadurch gekennzeichnet, daß die Oberflächen des nichtporösen Kunststoffolienträgers (8) aktiviert sind.

6. Elektrischer Leiter nach Anspruch 1 oder 2, dadurch gekennzeichnet, daß bei großen Dicken der Isolierhülse (2) zwischen den Glimmerbändern (3, 4) zusätzliche saugfähige Schichten vorgesehen sind.

## Claims

1. Electrical conductor or system of conductors (1), more particularly winding bars or coils of electrical machines, with an insulating sheath (2) wound from two different tapes, which sheath is impregnated and cured with a hardenable impregnating resin mixture, wherein tapes (3) consisting of an inorganic, sheet insulating material such as thin mica plate, fine mica or mica paper applied to a porous carrier of paper, fabric, fibrous web or plastics films, are cemented to the carrier, to each other and, if appropriate, to a covering layer by means of a bonding agent, so that in the insulating sheath (2), between the layers comprising tapes (3) with a porous carrier (5), single or plural layers of tapes (4) made of a non-porous plastics film are wound alternately, characterised in that the non-porous plastics films (8) also carry the inorganic, sheet insulating material and overlap each other.

2. Electrical conductor according to claim 1, characterised in that the layers with a tape (4) having a non-porous plastics film carrier (8) are uniformly distributed over the depth of the insulating sheath (2) between the layers comprising a tape (3) with a porous carrier (5).

3. Electrical conductor according to claim 1 or 2, characterised in that the mixture ratio between the layers comprising a tape (3) with a porous carrier (5) and the layers comprising a tape (4) with a non-porous plastics film carrier (8) is approximately 1 : 1.

4. Electrical conductor according to claim 1, characterised in that a film of terephthalic acid polyester is used as the non-porous plastics film carrier (8).

5. Electrical conductor according to claim 1, characterised in that the surfaces of the non-porous plastics film carrier (8) are activated.

6. Electrical conductor according to claim 1 or 2, characterised in that with great thicknesses of the insulating sheath (2), additional, absorbent layers are provided between the mica tapes (3, 4).

## Revendications

1. Conducteur électrique ou faisceau de conducteurs électriques (1), avec un enrobage isolant (2) enroulé à l'aide de deux rubans différents et qui est imprégné avec un mélange de résines imprégnatrices et est durci, en particulier de barres d'enroulements ou bobines de machines électriques, les rubans qui sont constitués par une matière isolante et anorganique, telle que des feuilles de mica, du mica fin ou du papier micacé, déposés sur un support en papier, en tissu, en voile ou en feuilles de matière plastique, étant collées avec le supportn entre elles et éventuellement avec une couche de couverture, au moyen d'un adhésif, de manière que dans l'enrobage isolant (2) en enroule alternativement, entre les couches en ruban (3) à support poreux (5), des couches individuelles ou plusieurs couches de ruban (4) en une feuille de matière plastique non-poreuse, caractérisé par le fait que les feuilles non-poreuses de matière plastique (8) portent, elles aussi, la matière isolante plane et anorganique, et se chevauchent.

2. Conducteur électrique selon la revendication 1, caractérisé par le fait que les couches en un ruban (4) à support de feuilles de matière plastique non-poreux (8) sont réparties uniformément sur la hauteur de l'enrobage isolant (2), entre les couches en un ruban (3) à support poreux (5).

3. Conducteur électrique selon la revendication 1 ou 2, caractérisé par le fait que le rapport de mélange entre les couches faites avec un ruban (3) à support poreux (5) et les couches en un ruban (4) à support de feuille de matière plastique non-poreux (8) est d'environ 1 : 1.

4. Conducteur électrique selon la revendication 1, caractérisé par le fait que l'on utilise, comme support de feuille de matière plastique non-poreux (8) une feuille en polytéréphtalate.

5. Conducteur électrique selon la revendication 1, caractérisé par le fait que les surfaces du support de feuille de matière plastique non-poreux (8) sont activées.

6. Conducteur électrique selon la revendication 1 ou 2, caractérisé par le fait que pour de fortes épaisseurs de l'enrobage isolant (2) on prévoit, entre les rubans de mica (3, 4), des couches absorbantes supplémentaires.

## FIG 1

## FIG 2